# EUROPEAN PATENT APPLICATION

(11) **EP 1 477 460 A1**
(43) Date of publication of application: **17.11.2004**
(21) Application number: 04380093.7
(22) Date of filing: 22.04.2004
(51) Int. Cl.: C02F 11/00, C04B 38/06, C04B 33/13

(54) **Process for manufacturing ceramic elements from muds from residual-water treatment plants**

(30) Priority: 16.05.2003 ES 200301132
(71) Applicant: FUNDACIO AGBAR, CENTRE D'ESTUDIS I INVESTIGACIO DEL MEDI AMBIENT, 08009 Barcelona (ES)
(72) Inventor: Cusido Fabregas, Joan Antoni, 08009 Barcelona (ES)
(74) Representative: SUGRANES - VERDONCES - FERREGÜELA

(57) **Abstract**

Process for manufacturing ceramic elements 5 consisting of mixtures of clay 1 and industrial muds 2 or muds from residual-water treatment plants, and pretreated agroforestry 3 or wood-based residues, comprising a pre-treatment step 4, which consists in letting a mixture of muds and agroforestry residues rest for a minimum of two days, at a controlled temperature and with a controlled water content, so that the organic compounds with a complex chemical structure are degraded to simpler chemical structures, resulting in a reduction in the concentration of toxic compounds and/or causes of the unpleasant odours generated during the normal process for manufacturing ceramic elements containing mud. With said process, the emission factors of volatile organic compounds (VOCs) are lower, while the concentration of toxic products from incomplete combustion are also reduced.

## Description

### Technical field of the invention

The present invention relates to a process for manufacturing ceramic elements for construction use consisting in mixtures of clay and muds from residual-water treatment plants and agroforestry or wood-based residues, said process comprising the steps of mixing the clay with the muds and other organic compounds; humidification and extrusion of the mixture; shaping of the ceramic element and drying thereof.

### Background of the invention

Due to the problem of eliminating the excess muds from residual-water treatment plants, an effort has been made to use said muds as agricultural fertilizers and material to manufacture ceramic.

An example of using said muds is disclosed in patents ES 009901916 and ES 009901918, in which Cusido *et al.* disclose processes for manufacturing ceramic elements which use muds from residual-water treatment plants with clay material, until the required grading is obtained. More specifically, in patent ES 009901918, a manufacturing process and ceramic element with beneficial properties are disclosed, said process and ceramic element obtained containing in the clay mix, treatment plant muds and forestry residues, which provide the right consistency for handling in later steps of manufacturing said ceramic element. Lingl *et al.* (US 4,112,033) and Hashimoto et al. (US 4,874,153) also describe ceramic objects and methods for the manufacture thereof, using muds from treatment plants or other industries.

One of the problems with the manufacturing process using muds or other residual organic compounds, is the release of gases with unpleasant odours which contain highly toxic compounds. The muds consists of complex mixtures of compounds which themselves are complex such as, for example, branched aromatic or aliphatic hydrocarbons with high molecular weight, organometallic compounds, organohalogenic compounds, such as organochloride compounds, etc., so that usually, under working temperatures, although very high, they do not fully oxidize. Thus, in the process of manufacturing ceramic elements, because of an insufficient level of oxygen inside the kiln, it is neither correct to speak of it fundamentally as either combustion or pyrolysis. And, considering that the muds particles are inserted in a mould of ceramic material, we can also consider that the process consists of an intermediate step between pyrolysis and combustion. The advantage of a process of pyrolysis over combustion is that the emission factors of volatile organic compounds (VOCs) are lower, although a higher proportion of toxic products are generated, jointly called "PICs" for "Products of Incomplete Combustion".

In Patent US 4,112,033, Lingl *et al.* suggest that oils be added to the clay and muds mixture. As well as improving the firing yield, the unpleasant odour of gases emitted during the process can also be dissimulated. Said patent also discloses how the gases, with a high content of aromatic organic compounds, are burned and oxidized in a tunnel-kiln which destroys any pathogen produced from the organic material in the mixture. Patent US 4,874,153 also suggests an alternative way of minimizing the release of offensive odours from products containing treatment plant mud, in this case by firing the muds before mixing it with any plastic ceramic material.

Although this is beneficial and environmentally friendly, the use of treatment plant muds for manufacturing ceramic elements also presents the problem of obtaining the correct grading required, as mentioned earlier. The high content of water in the mud, as well as its consistency, makes it difficult to agglomerate particles to obtain a distribution of grain size which is suitable for the required use. Said drawback is resolved by using ternary mixtures, which contain an additional granular element.

The object of the invention herein resolves some of the drawbacks mentioned and suggests an improved solution to the problem of toxicity and unpleasant odorous gases emitted during the manufacturing process.

### Explanation of the invention

The process for manufacturing ceramic elements consisting of mixtures of clay with industrial muds or muds from residual-water treatment plants and agroforestry or wood-based residues, being the object of the invention herein, is characterized in that it comprises a step of pre-treatment of the mixture of the muds and agroforestry residues, which consists of letting said mixture rest for a minimum of two days, with the presence of a tiny amount of catalysts, at temperatures ranging between 10°C and 50°C; and with a water content of no less than 50%, so that the organic compounds with a complex chemical structure are degraded to simpler chemical structures, resulting in a reduction in the concentration of toxic compounds and/or causes of the unpleasant odours generated during the process for manufacturing ceramic elements containing mud.

According to another aspect of the invention, said pre-treatment step is preferably carried out at temperatures between 18°C and 36°C, and with a water content of between 60% and 90%.

The process being the object of the invention, is also characterized in that part of the mixture of muds and agroforestry residues in the pre-treatment step, is reused in the subsequent pre-treatment step, with a new mixture of muds and agroforestry residues, to act as an initiator of the process to degrade the organic compounds contained in the mixture itself.

According to another characteristic of the invention, the volume of gases emitted is reduced when the concentration of toxic products of incomplete combustion is reduced.

### Brief description of the drawings

A description is given below of a specific, but non-limitative, embodiment of the process for manufacturing ceramic elements for construction use, being the object of the invention, with an accompanying drawing which provides an example to better understand said process. In said drawing, the different steps of the process can be seen.

### Detailed description of the drawings

In the diagram provided it can be seen, in accordance with the object of the invention herein, that muds 2 from a Residual-Water Treatment Plant, previously conditioned in a conditioning step 15, and treated agroforestry residues 3, are put into a mixer 6 where a homogenous mixture is obtained, which is then put in an enclosure 11 with a pre-treatment area 4, where said mixture of agroforestry residues 3 and muds 2 is left to rest for a minimum of two days, at temperatures ranging between 10°C and 50°C, and with a water content of not less than 50%.

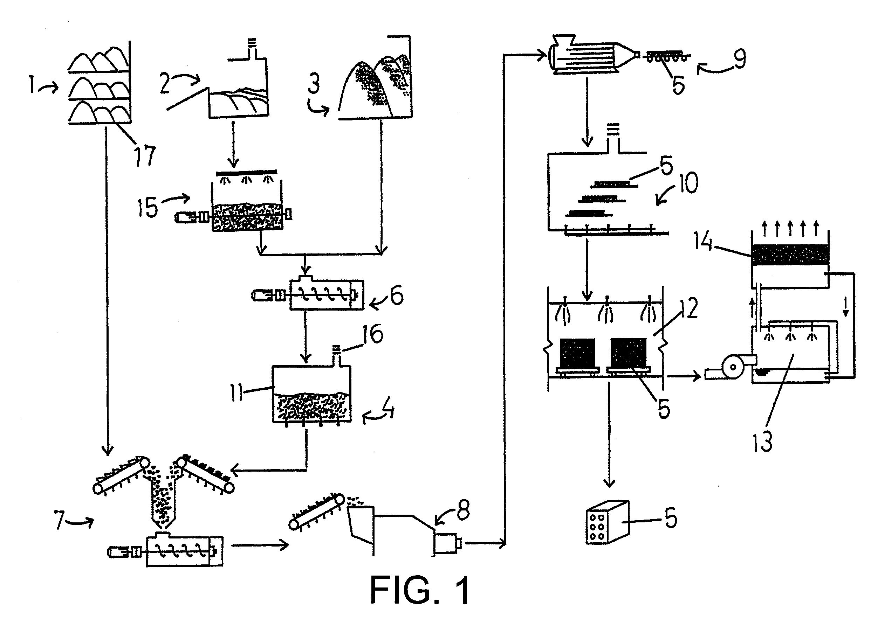

In said enclosure 11, there is an area for the large scale process of degrading the organic compounds via microbiological action, similar to the processes of making organic compost, commonly called precomposting. The compound 11 has suitable ventilating devices, not shown in Fig. 1; gas extraction devices 16 for subsequent thermal destruction; and exits for leaching products, not shown. The temperature of the compound 11 is maintained at temperatures preferably ranging between 18°C and 36°C, and the water content is monitored to be kept preferably between 60% and 90%, in order to provide the ideal conditions for short composting, or precomposting, of the mixture of muds 2 and agroforestry residues 3 being treated.

Once the pre-treatment step is over 4, the mixture of muds 2 and agroforestry residues 3 is taken, in the same way as the clay 1, from a deposit 17 to a mixer 7, where the three compounds are homogenized before moving to a milling step 8, which may be followed by a second milling step, using a milling machine and homogenization of products to refine the dough to make the ceramic elements 5, commonly called homodes.

With the objective of helping and accelerating a new cycle or step of pre-treatment 4, part of the muds mixture 2 with agroforestry residues 3, remains in the enclosure 11. Said part contains a high proportion of naturally selected micro-organisms, which act as initiators of the next pre-treatment step 4, which is highly effective in degrading the organic compounds present in the mixture. In this way, when new mixtures of muds 2 and agroforestry residues 3 are incorporated, the exponential increase in these selected micro-organisms and the micro-organisms produced from the new muds 2 is enhanced, optimizing and getting the best return from the pre-treatment step 4.

The process of shaping the ceramic element 5 follows immediately after, by means of an extruder 9, the ceramic element 5 being dried in a dryer 10 using warm air. Once dry, the ceramic element 5 is placed in a kiln 12 which, in the case shown, is a linear tunnel-kiln through which the ceramic elements 5 move along on blocks on the kiln floor for firing. In accordance with the usual process for firing ceramic elements 5 comprising organic material, the temperature curve or cycle of the kiln is suited to the type of organic material it contains, to prevent the presence of any noxious and/or contaminating residue in the end product. In the process in the invention, temperatures preferably between 400°C and 500°C are used. During the firing step in the kiln 12 is also when more emission factors are generated and released, comprising toxic compounds and/or causes of unpleasant odours. The object of the invention herein, significantly improves this step of the process for manufacturing ceramic elements with mud, both reducing the emission factors as well as the toxicity of the gases they contain, particularly the toxic gases produced by incomplete combustion.

In said diagram, it can also be seen that the gases produced during the firing of the ceramic elements 5, are conducted to a gas cleaning tower 13 where, via a circuit of water, the particles which may contain gases are decanted, and in which the air is filtered before being released into the atmosphere, via a filter 14 which adjoins the tower 13, and which can also include a system for the post-combustion of the gases emitted by the ceramic kiln.

In the ceramic kilns and during the process for manufacturing ceramic elements, where the clay is mixed with organic material of agroforestry origin, there is an intermediate situation between a process of combustion and a process of pyrolysis. This intermediate situation is the result of the organic mould being encapsulated inside the ceramic mould. Even though, in processes of pyrolysis, the factors of gaseous emission are usually of a lower magnitude than those in the processes of combustion, the quantity of high toxicity compounds is, on the other hand, higher. Said toxic compounds consist in organochloride compounds of the trichloromethane type; mercaptans; sulphurs such as methyl disulphide; aromatic aldehydes; ketones; nitriles; ethers; aromatic amines; aliphatic amides such as acetamide; linear, branched and polycyclic aliphatic hydrocarbons; aromatic hydrocarbons such as benzene or derivates thereof; and traces of furans and dioxins such as polychlorbenzene-p-dioxins cannot be avoided, which, if not detected, may appear because of the chemical complexity of the original compounds present in the raw materials used in the process.

With the process, being the object of the invention, which includes a pre-treatment step 4 of the muds 2 and agroforestry residue 3 mixtures, similar to precomposting, due to the short time in which it is left to stand, there is a simultaneous reduction in the volume of gaseous emission and concentration of toxic compounds emitted into the atmosphere, or toxic compounds to be treated by filtration before being emitted into the atmosphere, significantly reducing the impact on the environment.

The process being the object of the invention, is characterized in that the residual organic compounds used for mixing with the muds are agroforestry residues 3 such as sawdust from bark or wood, or any compound containing lignin, such as residues from paper or cellulose material. Said agroforestry residues 3 are used to obtain the grading required so that the muds 2 can be mixed with the clay, which favours the process of degradation of the organic compounds. In particular, with the presence of agroforestry residues 3 percentages of muds 2 used can reach between 25% and 30%, which is much higher than that usually used.

The process being the object of the invention, can produce any type of structural ceramic element 5 suitable for bearing water, such as bricks, tiles, grooving and tonguing platforms and specialized items peculiar to this industrial sector.

## Claims

1. Process for manufacturing ceramic elements (5) consisting of mixtures of clay (1) and industrial muds (2) or muds from residual-water treatment plants and pre-treated agroforestry (3) or wood-based residues, comprising the steps of mixing the clay with the muds and agroforestry residues; humidification, extrusion and shaping of the mixture; and firing and drying of the ceramic element, **characterized in that** it comprises a pre-treatment step (4) which consists of letting a mixture of muds and agroforestry residues rest for a minimum of two days, with the presence of a tiny amount of catalysts, at temperatures ranging between 10°C and 50°C; and with a water content of no less than 50%, so that the organic compounds with a complex chemical structure are degraded to simpler chemical structures, resulting in a reduction in the concentration of toxic compounds and/or causes of the unpleasant odours generated during the normal process for manufacturing ceramic elements containing mud.

2. Process for manufacturing ceramic elements (5) according to claim 1, **characterized in that** the preferred temperature range for the pre-treatment step (4) is between 18°C and 36°C; and the water content is between 60% and 90%.

3. Process for manufacturing ceramic elements (5) according to any one preceding claims, **characterized in that** part of the muds (2) and agroforestry residue (3) mixture from the pre-treatment step (4), is reused in the subsequent pre-treatment step, with a new mixture of muds and agroforestry residues, to act as an initiator of the process to degrade the organic compounds.

4. Process for manufacturing ceramic elements (5) according to any one preceding claims 1 to 3, **characterized in that** the emission factors of volatile organic compounds (VOCs) are lower, while the toxicity of gases they contain are also reduced, particularly the toxicity of gases obtained by incomplete combustion.
